Europäisches Patentamt

(19) European Patent Office

Office européen des brevets

(11) Publication number: **0 113 064**
**A1**

## (12) EUROPEAN PATENT APPLICATION

(21) Application number: **83112123.1**

(22) Date of filing: **02.12.83**

(51) Int. Cl.³: **G 02 F 1/133**

(30) Priority: **06.12.82 US 446843**

(43) Date of publication of application:
**11.07.84 Bulletin 84/28**

(84) Designated Contracting States:
**DE FR GB IT NL**

(71) Applicant: **TEKTRONIX, INC.**
**D/S Y3-121 4900 S.W. Griffith Drive P.O. Box 500**
**Beaverton Oregon 97077(US)**

(72) Inventor: **Haven, Duane A.**
**Route 1 Box 189-D**
**Banks Oregon 97106(US)**

(74) Representative: **Strasse, Joachim, Dipl.-Ing. European**
**Patent Attorney et al,**
**Strasse & Stoffregen Zweibrückenstrasse 15**
**D-8000 München 2(DE)**

(54) Liquid crystal cell employing surface tension forces to achieve uniform interplate spacing, and method of construction thereof.

(57) A liquid crystal display cell is provided in which a first wall-forming plate (51) of the cell is provided with a plurality of spacers (54) on its surface. A uniform loading force is applied to the cell which seats a second wall-forming plate (55) against the spacers on the first plate, thereby conforming and uniformly spacing the plates. The force is provided by the surface tension of a metered amount of liquid crystal material (57) which contacts the facing surfaces of the cell plates and draws them together. The liquid crystal material is confined to a delimited space between the plates by a raised ledge (53) which is placed in a closed pattern upon the surface of the first plate, the ledge and the inner surface of the second plate cooperating to reduce the meniscus (59) of the liquid crystal material which creates a pressure differential tending to limit the flow of the material.

FIG. 4

0113064

LIQUID CRYSTAL CELL EMPLOYING SURFACE
TENSION FORCES TO ACHIEVE UNIFORM INTERPLATE
SPACING, AND METHOD OF CONSTRUCTION THEREOF

## BACKGROUND OF THE INVENTION

The present invention relates to liquid
crystal display (LCD) cells and their construction,
particularly to uniformly-spaced LCD cells.

An LCD cell is formed from a pair of plates,
at least one of which is transparent and typically
made of glass, which are sealed at their peripheries
to contain a thin film of liquid crystal material
which is sandwiched between them. Such cells support
electrodes on their facing surfaces for applying electric fields in selected patterns across the film of
liquid crystal material, at least one electrode being
disposed on a transparent plate and itself being
transparent. The electric field changes the optical
transmission characteristics of the liquid crystal
material, thereby permitting the modulation of light
which travels through it.

The speed with which the liquid crystal material reacts to changes in the applied electric field,
and thus the speed with which it modulates the light
passing through it, is inversely related to the square
of the thickness of the liquid crystal layer. In
addition, certain optical characteristics of the cell
(such as the amount of phase shift or retardation of
transmitted light) depend critically on the thickness
of the cell. Depending upon the use for which the LCD
cell is intended, the thickness of the layer can vary
from 1 micrometer to 100 micrometers.

To ensure that the LCD cell exhibits uniform
optical and modulation characteristics across its
entire active surface, the spacing between the plates
forming the cell must be constant. This can pose a
significant manufacturing problem in the case of very thin devices: for cells on the order of a few microns
thick which are intended for high speed operation,
variations in cell thickness of less than a micron can
result in a significant change of modulation speed in
the area where the variation occurs.

In the art, spacing uniformity is maintained
between a pair of insulator plates generally by one or
a combination of two methods: (1) the dimensions of a
peripheral seal joining the plates are precisely controlled so that the seal also acts as a spacer; and
(2) a spacer structure is disposed between the plates
interior to a peripheral seal. Examples of the first
method are found in Gurtler U.S. Patent No. 3,909,930,
and Nagahara, et al., U.S. Patent No. 3,995,941. In
the first patent, a spacing peripheral seal is formed
when a photopolymeric material deposited on the periphery of one plate is bonded to the other plate by
pressing the plates together and heating them. In the
Nagahara reference, a low-melting point glass is used
to form a peripheral sealant-spacer.

Examples of the second method are found in
Leupp et al., U.S. Patent No. 3,978,580; Hofmann, U.S.
Patent No. 4,283,119; J. Addy, et al., "Spaced Liquid
Crystal Display" IBM Technical Disclosure Bulletin,
Vol. 23, No. 5, October 1980; and in Arneson, et al.,
U.S. Patent Application Serial No. 81,757 filed
October 4, 1979. In the Leupp, et al. patent, the
internal spacer structure comprises a two-dimensional
grid of photographically shaped dielectric material.
The Hofmann spacers comprise thin wire filaments which
are disposed between the insulator plates. The interior spacers of the Addy, et al. article also comprise
photographically formed materials. In the Arneson
patent application, the spacers comprise an array of
projections of uniform height which are deposited
upon the surface of one insulator plate by a photo-
patterning process.

-3-

An LCD cell combining both the peripheral seal and internal structure spacing methods is taught in Burns U.S. Patent No. 3,771,855. Mueller, et al., U.S. Patent No. 4,158,485, teaches the use of spacer elements incorporated into a peripheral seal which is used to join a pair of plates to form an LCD cell.

To achieve uniform spacing using the above-discussed methods of construction, plates having perfectly flat surfaces must be used, otherwise the spacers which are incorporated into the cell may not contact both cell surfaces and may only define a minimum but not a maximum spacing distance. While perfectly flat plates are desirable from the standpoint of achieving spacing uniformity, they are difficult and expensive to produce and their use in LCD cell construction must invariably and significantly increase cell production costs. This problem is particularly acute in the construction of large area, very thin film LCD cells because the difficulty in producing a perfectly flat plate is directly related to the area of the plate, and because even small deviations from flatness on the surface of the plate may be substantial when compared to the desired thickness of the confined liquid crystal layer. In the cases where non-flat plates will or must be used to construct cells, the methods and structures taught in the above-cited references will not provide uniform spacing.

A method and structure for removing or flattening plate bends and seating the plate against an integrated spacer structure in an LCD cell is taught in Maltese, et al., "Improved Construction of Liquid Crystal Cells," Alta Frequenzia, No. 9, Vol, XLVII, 1978. In the Maltese, et al. method, a plate is formed with a slight bend oriented outwardly from an associated plate. The bent plate is pressed against and cemented to the other plate so that the bend is flattened and stresses internal to the cell are set up which tend to force the plates together. The forces, however, are not distributed with uniform magnitude across the interface between the plates, with the result that the plates are not uniformly pressed together. Another limitation of this approach is that some of the internal stress of the plate acts in opposition to the cement seal, which may force it apart under conditions of thermal or electrical stress or when it has weakened from age. Finally, the process of placing the initial bend in the plate is a complex and slow one and can introduce unwanted stresses which interfere with the desired optical characteristics of the glass from which the plate is formed.

Accordingly, there has heretofore been a need for LCD cell construction methods which will provide uniformity of spacing between plates which are not perfectly flat.

## SUMMARY OF THE INVENTION

The present invention meets the aforementioned need by providing an LCD cell structure in which two plates are maintained by spacers, which are placed on one plate, in a uniformly-spaced relation by uniformly loading at least the other plate with a force which is uniformly distributed thereover in a direction which seats that plate against the spacers and conforms its contour to the contour of the one plate.

In accordance with a first preferred embodiment of the invention, a liquid crystal cell comprises a first plate having a plurality of spacers carried by one surface. An amount of liquid crystal material is placed upon the surface of the first plate which carries the spacers and a second plate is placed on the spacers to be positioned substantially parallel to the first plate, the second plate having a rigidity significantly less than the rigidity of the first plate, the relative rigidity of the plates being determined primarily by their relative thickness. The second plate carries a resilient material on its upper surface. A pressure plate which is more rigid than the second plate is placed over the second plate so that the second plate is sandwiched between the pressure plate and the first plate and the resilient material is sandwiched between the pressure plate and the second plate. The pressure plate is clamped to the first plate so that the pressure plate exerts a force which is uniformly distributed over the second plate through the resilient material, with the force being directed toward the first plate, thereby seating the second plate on the spacers and conforming to the contours of the two plates. The first plate and the second plate are sealed at their periphery so that the liquid crystal material is contained between them.

According to a second embodiment of the invention, a liquid crystal cell comprises a first plate having on one surface thereof a raised ledge of material forming a closed pattern and a plurality of spacers of substantially uniform height within the area delimited by the raised ledge, the spacers extending above the ledge. A metered amount of liquid crystal material is placed on the surface of the plate within the area delimited by the raised ledge and a second plate is placed on the spacers so that it is positioned with respect to and removed from the one surface of the second insulator plate. The surface tension of the liquid crystal material uniformly loads the first insulator plate with a force causing it to be drawn and seated against the spacers. The first and second insulator plates are sealed at their periphery.

-6-

In a third embodiment of the invention, an LCD cell is constructed by preparing a first plate by forming a plurality of spacers on one of its surfaces. Thereafter, a second plate is placed on the spacers and positioned substantially parallel to the first plate, and the periphery of the plates is hermetically sealed except for one or more openings. Liquid crystal material is introduced into the interior of the cell, between the plates, and all openings but one are sealed. Thereafter, an amount of the liquid crystal material is pumped out of the sealed interior through the one opening. Thereafter, the opening is sealed. The partial evacuation of liquid crystal material creates a differential in pressure between the closed interior of the LCD cell and the surrounding atmosphere which causes a force to seat the second plate on the spacers conforming it to the first plate and uniformly spacing the plates.

It is therefore a principal object of the present invention to provide a cell for containing liquid crystal material between two plates wherein uniform spacing between the two plates is accomplished by uniform loading of the plates, and methods for construction thereof.

It is another object of the invention to provide such a cell wherein uniform loading of one plate is accomplished by using a layer of resilient material to distribute force substantially uniformly over the surface of the plate.

It is yet another object of the invention to provide such a cell wherein uniform loading is accomplished by employing surface tension between the plates and the liquid crystal material to force the plates toward one another.

It is a further object of the invention to provide such a cell wherein uniform loading is accomplished by hermetically sealing the space between said plates and reducing the pressure therein.

The foregoing and other objectives, features, and advantages of the invention will be more readily understood upon consideration of the following detailed description of the invention, taken in conjunction with the accompanying drawings.

BRIEF DESCRIPTION OF THE DRAWINGS

FIG. 1 is a fragmentary cross-sectional view of a typical liquid crystal display cell.

FIG. 2 is a fragmentary cross-sectional view of a liquid crystal cell showing the effect of an imperfectly conforming plate.

FIG. 3 is a cross-sectional view of a first embodiment of a liquid crystal display cell.

FIG. 4 is a cross-sectional view of a second embodiment of a liquid crystal cell.

FIG. 5 is a cross-sectional view of a partially-constructed third embodiment of a liquid crystal cell, along with apparatus for construction thereof.

FIG. 6 is another cross-sectional view of said third embodiment of a liquid crystal cell, partially constructed, along with apparatus for construction thereof.

DESCRIPTION OF THE PREFERRED EMBODIMENTS

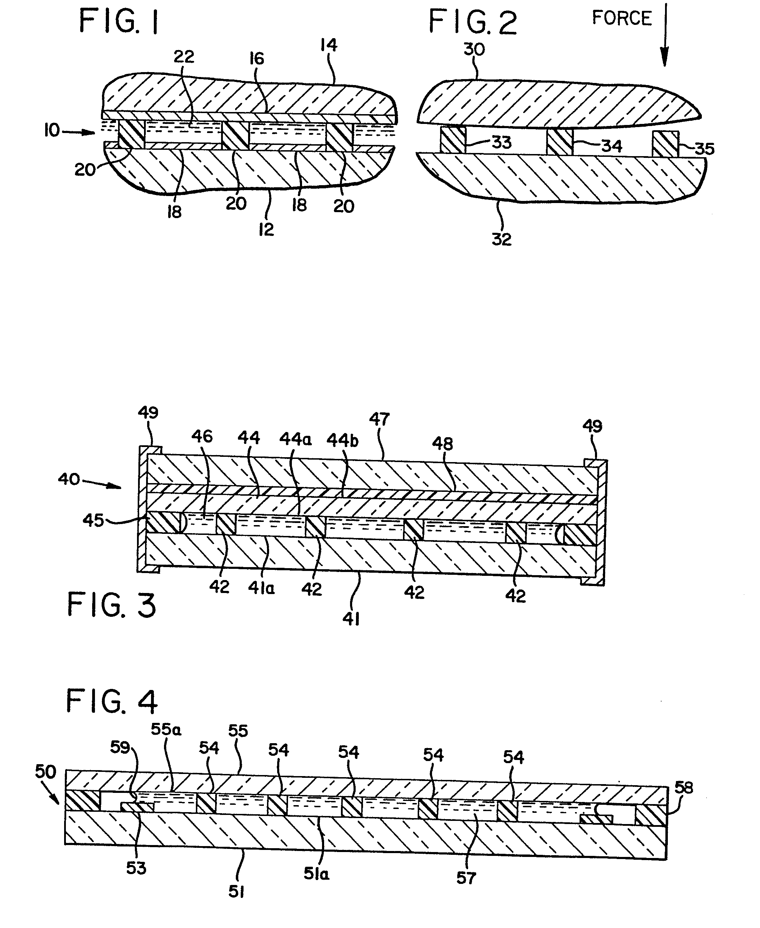

Referring now to the drawings, a typical liquid crystal display (hereinafter "LCD") cell having spacers of substantially uniform thickness incorporated in the construction thereof is illustrated in FIG. 1. The LCD cell 10 comprises first and second glass plates 12 and 14 which are held in a uniformly-spaced relationship by a plurality of spacers 20 formed in a pattern dictated by the intended use of the cell. Shown for purposes of illustration, but not limitation, are a plurality of transparent electrodes placed upon opposing surfaces of the plates 12 and 14, with plate 14 carrying a plurality of strip electrodes 16 in perpendicular alignment to a plurality of strip electrodes 18 carried by the plate 12. A quantity of liquid crystal material 22 is contained between the plates 12 and 14 by an appropriate seal, not illustrated, which extends around the periphery of plates 12 and 14.

The spacers 20 preferably comprise a dielectric material, such as photo-resist, which will not dissolve in or react with the liquid crystal material 22. The spacers may be formed on the surface of the plate 12 by any of a variety of deposition methods well known in the art of liquid crystal cell construction. An example of spacer construction for LCD cells is provided in the Alta Frequenzia article cited above and also in a currently pending U.S. patent application, Serial No. 81,757, filed October 4, 1979, by Arneson, et al.

It can be the case that the plates forming the LCD cell are perfectly flat, as shown in FIG. 1. However, it is more often the case that their surfaces deviate from perfect planarity and produce effects in LCD cell construction which are illustrated in Fig. 2. Non-flatness of the plate 30 results in a deviation of the spacing between it and the plate 32, which spacing it is the purpose of the spacers 33, 34, and 35 to maintain. According to the principles underlying the methods of the present invention, the shape of the plate 30 may be conformed to the shape of the plate 32 by the application of a uniformly-distributed pressure differential between the cavity formed between the plates and the outer surfaces of the plates, with the pressure on the outer surface being greater than the pressure within the cavity. The pressure differential will seat the plate 30 against the spacers 33-35 thereby enforcing the uniformity of spacing between the plates and conforming the shape of plate 30 to the shape of plate 32.

It is evident from FIG. 2 that if a non-distributed force is applied to the plate 30 in the direction shown by the arrow, the force may concentrate and crush a spacer if the force is of sufficient magnitude. Thus, if a force sufficient to remove a bend in the plate were applied by clamping together the plates at their edges, it would concentrate on and could fracture the middle spacer 34. The possibility of damage to the spacer can be reduced according to the principles underlying the methods and structures of the present invention, if a distributed pressure differential is applied which uniformly loads the plate 30 to flatten it and seat it on the spacers.

The calculation of the force produced by the pressure differential which is to be applied on the insulator plate must take into account the maximum deformation which one spacer can undergo without exceeding its elastic limit. This can be determined from an approximate model depicting a section of plate between two spacers as a simple beam supported at both ends, and applying the well-known equation for the calculation of a uniformly-distributed force pressing the beam against the supports. The force is given by

$$F = \frac{6.4 \, (y_{max}) \, Ywt^3}{L^4} \tag{1}$$

where $y_{max}$ is the maximum expected deviation from planarity on the surface of the plate, Y is the Young's modulus of the material constituting the plate (typically glass), w is the width of the plate, t is the plate's thickness, and L is the length of the plate segment. For purposes of illustration, if it is assumed that w = 1", L = 1", t = 0.0625", $y_{max}$ = 2 micrometers and Y = $9.8 \times 10^6$ lbs/in., the loading required for straightening the deflection is 1.21 lb/in. If it is also assumed that all of this force is distributed on one square spacer 0.01" on a side, a total stress of $1.2 \times 10^4$ would be applied. The strain on the spacer is next calculated to ensure that it is not deformed beyond its elastic limit. According to the well-known formula, strain = (stress/Young's modulus). For a spacer constructed of, for example, a polyimide material which has a Young's modulus of $4.3 \times 10^5$ lbs/in.$^2$, the strain would be 0.028, which is well within the material's elastic limit.

To impose the desired uniformity of spacing, it is important that the force uniformly load the plate, that is, that its magnitude not deviate significantly from its mean value as a function of location on the plate. Without uniform loading, it would be much more difficult to achieve uniform spacing and optimum operation of the cell.

Another factor to be considered in utilizing a force to impose uniform spacing is the electrostatic attractive force which will tend to force the plates together when the cell is operated. This force can be calculated according to known methods and must be accounted for in the calculation of strain on a spacer, it will effectively limit the magnitude of the uniform-spacing force. Also to be heeded is the bowing effect which the force will introduce into the already-flat sections of the loaded plate. However, the force calculation of equation (1) shows that spacer density can operate to diminish this effect. If the spacers are placed in selected locations, for example if they are spaced 0.25 inches apart, then the applied force which is adequate to take the curvature out of the 1-inch-square section postulated above will produce a deflection reduced by $(0.25)^3$ in the 0.25-inch section, or, less than 0.1 micrometer.

It is evident from the foregoing that a useful improvement in the construction of LCD cells may be realized by the application of a distributed force to one or both of the plates from which the cell is constructed which uniformly loads the plate and which presses one of them against spacers mounted on the opposing plate to impose a uniform separation between the plates. As demonstrated above, the magnitude of the force will be determined by the composition and thickness of the plate or plates against which it is applied, the maximum expected non-planarity in the surface of the plate, and by the composition, size and selective placement of the spacers. As it is sometimes the case that the size and separation of spacers are determined by other design factors, such as the visibility of the spacers and their placement into a desired pattern, then the tradeoffs made to incorporate the uniform-spacing force will affect the composition and thickness, that is, the rigidity, of the plate against which the force is applied.

Referring now to FIG. 3 of the drawings, which is not to scale, an LCD cell indicated generally by 40, whose structure incorporates a uniform-loading force, comprises a first plate 41 having a plurality of individual spacers 42 of substantially uniform thickness formed on its inner surface 41a. The spacers maintain a minimum separation between the first plate 41 and a second plate 44 less rigid than the first, the second plate having a thickness determined according to the considerations stated hereinabove, and having an inner surface 44a and an outer surface 44b. The cell additionally includes a seal 45 extending around the periphery of the plates to contain a liquid crystal material 46 sandwiched between them. A pressure plate 47, which is more rigid than the second plate 44, is disposed adjacent the outer surface 44b of the second plate 44 so that the second plate is sandwiched between the pressure plate 47 and the first plate 41, a transparent resilient elastomer 48 being sandwiched between the pressure plate 47 and the outer surface 44b of the second plate 44. Also included in the structure are a plurality of clamps 49 which are pre-sprung in a direction which causes them to exert a compressive pressure between the pressure plate 47 and the first plate 41.

In the assembled cell, the clamps 49 develop a force which presses the pressure plate 47 and the first plate 41 toward each other. The force is transferred from pressure plate 47 through the resilient elastomer 48 which equalizes it and applies it uniformly across the outer surface 44b of the second plate 44 to seat it against the spacers 42. The force can be increased to a degree by prestressing the pressure plate to produce a convex surface which is placed against the elastomer 48 and flattened by the clamps 49.

The first and second plates and the pressure plate would typically be constructed of a transparent material, preferably, but not necessarily, glass. Alternatively, the second plate 44 can comprise other materials, structures, or combinations of both, which respond to the conforming force imposed by the pressure plate 47 in the manner and according to the considerations stated hereinabove. One or both of the plates 41 and 44 may have electrodes, not shown, on their opposing surfaces. While the plates would all be made of transparent material in order to produce a transmission-type LCD cell, only one plate would have to be transparent for a reflective-type display. In addition, while the plates would ordinarily be made of electrically insulating material, they would not necessarily have to be, depending upon how the electrical field pattern is to be produced.

The spacers can be deposited and selectively located by a conventional photolithographic process on the surface 41a of the first plate 41 which faces the second plate 44. The seal 45 is formed from an epoxy compound or other suitable sealing material which is applied and cured by any well-known method. The elastomer 48 comprises any conventional clear material having good resilient properties; it may consist of, for example, a clear silicone rubber compound such as that sold under the designation SILGARD, a trademark of E. I. Dupont deNemours & Company.

The LCD cell 40, illustrated in FIG. 3, is constructed by providing spacers 42 at multiple locations upon surface 41a of first plate 41. A liquid crystal material 46 is placed on the surface 41a, and a second plate 44 is placed on the spacers 42, which substantially align the second plate with the first. The peripheral region between the first and second plates is closed by a seal 45 which contains the liquid crystal material between the plates. An opening, not shown, is provided in the seal 45 to allow the liquid crystal material to flow after attachment of the pressure plate 47. Thereafter, a layer of a transparent elastomer 48, preferably a clear silicone rubber compound is disposed on the outer surface 44b of the second plate 44. A pressure plate 47 is placed on the resilient material 48 so that the material is sandwiched between the pressure plate and the second plate 44. Thereafter the pressure plate 47 is clamped by clamps 49 to the first pressure plate 41. The pressure plate 47 may be prestressed to form a convex surface which is placed against the elastomer 48 and flattened by the clamps 49. As a final step, the opening in the seal 45 is closed, providing a continuous, unbroken barrier to retain the liquid crystal material in the cell.

A second embodiment of an LCD cell employing a uniform-spacing force is illustrated in FIG. 4, (not to scale). The cell, indicated generally by 50, comprises a first plate 51 having on its upper surface 51a a raised ledge 53 forming a closed pattern which delimits an area, preferably, but not necessarily, in the shape of a square or rectangle, a plurality of spacers 54 of uniform thickness deposited in an open pattern on the facing surface within the delimited area and projecting above the raised ledge which maintain a minimum separation between the first plate 51 and a second plate 55, a metered amount of liquid crystal material 57 which is sandwiched between and which contacts the first and second plates 51 and 55 in a space defined by the area delimited by the ledge 53, and a seal 58 which closes the peripheral gap between the first and second insulator plates to prevent the escape or contamination of the liquid crystal material 57.

The surface tension of the metered amount of liquid crystal material 57 provides the force which draws the interior surface 55a of the second plate 55 toward the first plate 51 and seats it on the spacers 54. In the case where the cell is vertical when filled, the magnitude of the force is given by the well-known surface tension force relationship:

$$F = t \frac{wh}{x} \qquad (2)$$

where F is the calculated force, t is the surface tension of the liquid crystal material, w is the width of the plate area contacted by the liquid, h is the height of the liquid column, and x is the spacing between the plates. In the case where the cell is flat:

$$F = 2t \frac{wh}{x} \qquad (3)$$

In equations (2) and (3) the quantity $(wh)/x$ can be replaced by $V/x^2$ where $V = whx$ is the volume of liquid crystal material required to generate the desired force by surface tension. Thus, the metered amount of liquid crystal material is determined by $V$. This consideration alone is sufficient to calculate a required amount of material which could then be sandwiched between the plates without provision of the ledge 53. Assuming proper wetting of both plates to enable the liquid crystal to flow between them, the surface tension between the plates and the material will uniformly load the plates with the force calculated in equation (2) or (3).

In the embodiment illustrated in FIG. 4, the required volume of liquid crystal material is contained in and therefore determines the dimensions of the space between the plates which is defined by the area delimited by the raised ledge 53 and thickness of spacers 54. The relationship between the volume $V$ and the dimensions are such to allow the formation of a meniscus 59 in the space between the ledge 53 and the inner surface 55a of the second plate 55. One effect of the raised ledge 53 is to confine the metered amount of liquid crystal material within the space defined by the delimited area. Another effect is to increase the magnitude of the force acting between the ledge 53 and the inner surface 55a by decreasing the spacing, $x$, in equations (2) and (3). However, it is evident that, in the most general case, the surface tension LCD cell illustrated in FIG. 4 will be operative without the ledge 53. The edge of the liquid crystal material would be irregular, but the surface tension would still create the desired force.

In the construction of the LCD cell illustrated in FIG. 4, the insulator plates and spacers are constructed according to the materials and methods specified for corresponding parts of the LCD cell illustrated in FIG. 3. In addition, at the time that the spacers 54 are deposited on the surface 52 of the first plate 51, the raised ledge 53 is formed as an added step in the same process. Once the ledge and spacers are formed, liquid crystal material 57 of an amount determined as explained hereinabove, is placed on the surface area of the first plate 51 delimited by the raised ledge 53. Then, the second plate is placed on the spacers 54 which orient it generally parallel to the first plate 51. After waiting a period of time sufficient to allow the liquid crystal material to stabilize and accumulate within the space between the plates defined by the delimited area, the plates are sealed at their periphery as described hereinabove for the LCD cell illustrated in FIG. 3.

In a variation of the method of constructing the LCD cell 50 illustrated in FIG. 3, the deposition and stabilization of the liquid crystal material can be performed in a vacuum drawn by conventional means. This will remove gasses trapped in the material which otherwise might collect at the interfaces between the insulator plates and the material and thereby create localized differentials in the force produced by the surface tension and impair the spacing uniformity.

An LCD cell as shown in FIG. 3 could also be constructed as a multiple layer device, each layer operating independently of the other. In this case, the second plate of a first layer could form the first plate of the next plate, and so on. Each layer would be constructed substantially as hereinbefore described.

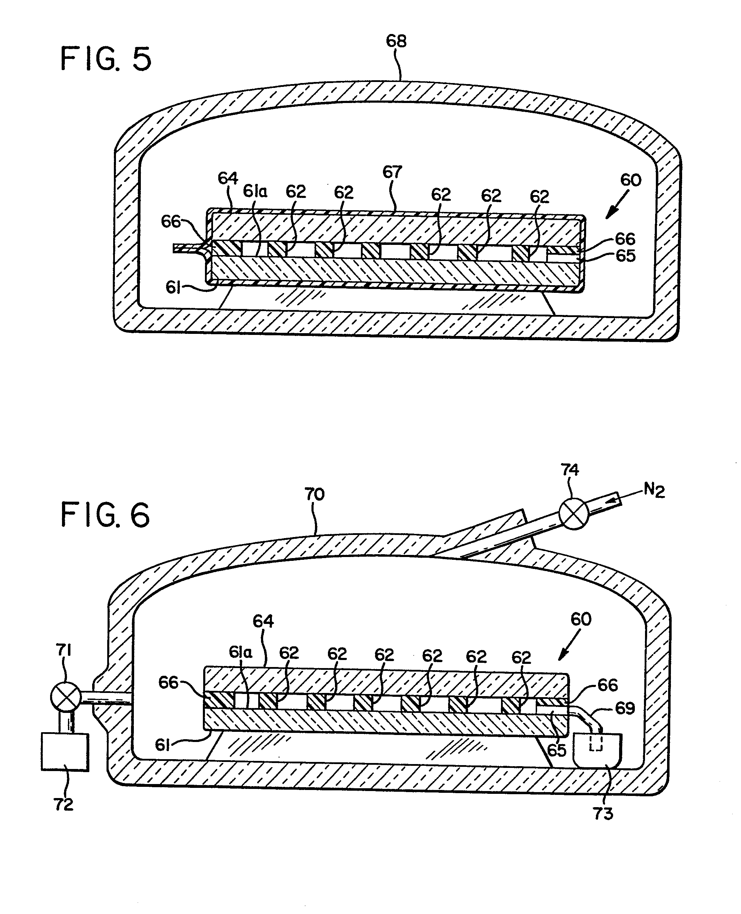

It has been found that an LCD cell which incorporates a uniformly-distributed conforming force
acting on one of its plates can be constructed as
shown in FIGS. 5 and 6 (not to scale). In the construction of the LCD cell, indicated generally by 60,
a first plate 61 is prepared by depositing a plurality
of spacers 62 of uniform thickness at various locations on one of its surfaces 61a as described hereinabove. A second plate 64 is placed on the spacers 62
so that it is substantially aligned with the first
plate in a spaced relationship. The plates are hermetically sealed at their periphery with one or more
openings, one of which is shown at 65, forming passages through the seal 66.

FIG. 5 illustrates one method of forming a
hermetic seal 66 between the plates 61 and 64. First
a thermosetting compound such as epoxy is placed around
the periphery between the plates in an amount sufficient to contact them and form a seal therebetween.
To form a port, a portion of the epoxy may be omitted
so that when the epoxy is cured, a gap will occur in
the seal where the omission was made. Thereafter, the
plates with the thermosetting compound are placed in a
flexible, heat-resistant enclosure 67, such as a bag,
in which a vacuum is drawn through a vacuum pump (not
shown). The vacuum in the flexible enclosure produces
a compressive force which is distributed evenly over
the plates and the sealing compound. Then, the bag is
sealed to preserve the vacuum and placed in a heated
oven 68. The combination of temperature and pressure
causes the thermosetting sealing compound to set in a
uniformly-dimensioned seal, which includes the above-
mentioned ports, around the periphery between the plates
which disposes the plates in a uniformly-spaced, generally parallel alignment at their edges. Then, the bag
and sealed plates are removed from the oven 68, and the
sealed plates are removed from the bag.

Next, an amount of liquid crystal material
sufficient to substantially fill the space between the
plates is inserted through one opening into the space.
The conforming force is then generated by hermetically
closing all but one opening in the hermetic seal, and
thereafter extracting through the opening an amount of
liquid crystal material, or air, or both, sufficient
to create a pressure differential between the interior
of the LCD cell 60 and the ambient atmosphere surround-
ing it, and therafter to hermetically seal the remaining opening so that the pressure differential will be
preserved.

With reference now to FIG. 6, one method of
creating a pressure differential between the interior
of the LCD cell and the ambient atmosphere is illustrated. One or more filler tubes, one of which is
shown at 69, are sealingly attached to the seal 66 in
communication with the openings, one of which is shown
at 65. The assembly comprising the sealed insulator
plates and filler tube is placed in a vacuum apparatus
70, such as a bell jar. The space surrounding and
interior to the plates, seal and filler tubes is evacuated through the pneumatic valve 71 and the vacuum
pump 72, with the vacuum being introduced into the
hermetically sealed space between the plates through
the filler tubes.

After the vacuum is drawn, the ends of the
filler tubes extending outside the hermetically closed
space are inserted into one or more vessels, one of
which is shown at 73, which are contained within the
evacuation space and which hold an amount of liquid
crystal material. Thereafter, the vacuum in the space
surrounding the plates is relieved by pumping a gas,
nitrogen for example, through the pneumatic valve 74
in the direction shown. The relief of the vacuum within
the vacuum apparatus 70 creates a pressure differential
with respect to the hermetically sealed space between

-19-

the insulator plate which forces an amount of the
liquid crystal material contained within the vessel 73
through the filler tubes, the amount being sufficient
to fill the hermetically closed space. When the space
between the plates is filled, the LCD cell is removed
from the vacuum apparatus 70 into an environment
having an ambient pressure and an amount of liquid
crystal material is pumped by conventional means out
through the filler tubes. The evacuation of liquid
crystal material from the hermetically closed space
creates a pressure differential between that space and
the ambient pressure of the environment surrounding
the LCD cell. The force of the pressure urges the
plates 61 and 64 toward one another with the second
plate 64 seating on the spacers 62, and thereby produces uniform spacing between the two plates as hereinabove described. The magnitude of the force can be
monitored by measurement of the relative amount of
liquid crystal material evacuated from the hermetically closed space, or by direct measurement of the
pressure differential through the tube 69. Thereafter,
all tubes are removed and openings sealed to retain
the pressure differential and the conforming force.

It should be evident to those skilled in the
art that the inventions described herein and the force
models which underlie them are not limited to the above-
described embodiments but can be adapted to apply the
conforming principle to other LCD cell structures incorporating spacer means such as those described in the
patents and articles cited in the Background section
hereof.

The terms and expressions which have been
employed in the foregoing specification are used
therein as terms of description and not of limitation,
and there is no intention, in the use of such terms
and expressions, of excluding equivalents of the
features shown and described or portions thereof, it
being recognized that the scope of the invention is
defined and limited only by the claims which follow.

I CLAIM:

    1.    A liquid crystal cell comprising:

(a)    a first plate;

(b)    spacer means of substantially uniform thickness disposed on one surface of said first plate at multiple locations for maintaining a minimum separation between said first plate and a second plate;

(c)    a second plate having one surface disposed against said spacer means; and

(d)    a predetermined amount of liquid crystal material sandwiched between and contacting said first and said second plates, the surface tension of said liquid crystal material exerting a uniformly distributed force on said plates so that said second plate is seated against said spacer means.

    2.    The liquid crystal cell of claim 1 further comprising a raised ledge formed on said one surface of said first plate, said raised ledge forming a closed pattern which delimits an area on said one surface, said spacer means disposed within said delimited area and extending above said ledge, and said liquid crystal material confined in the space between said plates defined by said delimited area.

    3.    The liquid crystal cell of claim 2 wherein said ledge and said spacer means are formed of the same material deposited onto said first plate.

    4.    The liquid crystal cell of claim 2, further comprising sealing means, disposed at the periphery of said plates outside said ledge, for containing said liquid crystal material between said plates.

5.    The liquid crystal cell of claim 4 wherein said predetermined amount is such that the meniscus of said material is confined between said ledge and said one surface of said second plate, said sealing means enclosing a space between said meniscus and said sealing means.

6.    A method for constructing a liquid crystal cell, comprising the steps of:
    (a)    placing spacing material of substantially uniform thickness on one surface
           of a first plate at multiple locations;
    (b)    thereafter, placing a predetermined
           amount of liquid crystal material on
           said one surface of said first plate;
    (c)    thereafter, placing a second plate over
           said spacing material and liquid crystal
           material and waiting an amount of time
           sufficient for the surface tension of
           said liquid crystal material to uniformly
           load said second plate so that it is
           seated against said spacing material; and
    (d)    thereafter, sealing the space between
           said first and said second plates at the
           periphery thereof.

7.    The method of claim 6, step (a) further comprising placing a raised ledge of material on said one surface of said first plate in a closed pattern which delimits an area, said spacing material being disposed within said delimited area.

-22-

8.   The method of claim 7 wherein said ledge and said spacing material are placed on said first plate by depositing on said first plate a suitable separating material and thereafter etching said separating material to form said ledge and spacing material.

## FIG. 1

22  16  14

10 →

20

18  20  18  20

12

## FIG. 2

FORCE ↓

30

33  34  35

32

## FIG. 3

49  49

46  44  44a  44b  47  48

40 →

45

42  41a  42  42  42  42

41

## FIG. 4

55a  55

59  54  54  54  54  54

50 →

58

53  51  51a  57

51

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 506 978 (C.E.A.) <br><br> * Pages 6-7; page 9, line 4 - page 11, line 20; figures 1-2 * | 1,2,4-7 | G 02 F 1/133 |
| A | GB-A-2 014 345 (SIEMENS) <br> * Page 1, lines 87-99 * | 8 | |
| A | US-A-3 600 061 (G. HEILMEIER et al.) <br> * Claim 1 * | 1,2 | |

**TECHNICAL FIELDS SEARCHED (Int. Cl. ³)**

G 02 F 1/133
G 02 F 1/01
G 02 F 1/17

The present search report has been drawn up for all claims

| Place of search | Date of completion of the search | Examiner |
|---|---|---|
| THE HAGUE | 20-03-1984 | BORMS F. |